# EUROPÄISCHE PATENTANMELDUNG

(11) **EP 1 509 030 A1**
(43) Veröffentlichungstag der Anmeldung: **23.02.2005**
(21) Anmeldenummer: 04019935.8
(22) Anmeldetag: 23.08.2004
(51) Int. Cl.: H04M 3/38, H04M 3/42

(54) **Vorrichtung und Verfahren zum Bereitstellen von Diensten in einem Kommunikationsnetzwerk mit Zugangskontrolle**

(30) Priorität: 21.08.2003 DE 10338477
(71) Anmelder: TELIO Holding AG, 22765 Hamburg (DE)
(72) Erfinder: Fuchs, Heiko, 20359 Hamburg (DE)
(74) Vertreter: Beetz & Partner Patentanwälte

(57) **Zusammenfassung**

Die Erfindung betrifft eine Vorrichtung zum Bereitstellen von Diensten in einem Kommunikationsnetzwerk, mit einem Endgerät (1), mit einer Eingabeeinrichtung (2) und einer Anzeigeeinrichtung (3), wobei mittels der Eingabeeinrichtung (2) Zugangsdaten und Verbindungsdaten eingegeben und zumindest die Verbindungsdaten auf der Anzeigeeinrichtung (3) angezeigt werden, und einer Steuervorrichtung (4), die mit dem Endgerät (1) verbunden ist und eine Datenbank (5) aufweist, welche zumindest Einstellungsdaten enthält, wobei eingegebene Zugangsdaten an der Eingabeeinrichtung (2) überprüft werden, zwischen dem Endgerät (1) und der Steuervorrichtung (4) eine Verbindung aufgebaut wird, aus der Datenbank (5) in die Steuervorrichtung (4) Einstellungsdaten in Abhängigkeit der von dem Endgerät (1) an die Steuervorrichtung (4) übermittelten Zugangsdaten eingelesen werden, ein erster spezifischer Dienst in der Steuervorrichtung (4) in Abhängigkeit der eingelesenen Einstellungsdaten aktiviert wird, der die Kommunikation zwischen dem Endgerät (1) und der Steuereinheit steuert, ein zweiter spezifischer Dienst in der Steuervorrichtung (4) in Abhängigkeit des ersten aktivierten Dienstes und der von dem Endgerät (1) an die Steuervorrichtung (4) übermittelten Verbindungsdaten aktiviert wird, der die Kommunikation zwischen dem Endgerät (1) und mindestens eines weiteren Endgerätes (1) steuert, und ein dritter spezifischer Dienst in der Steuervorrichtung (4) zum Aufzeichnen mindestens der eingegebenen Zugangsdaten und Verbindungsdaten in der Datenbank (5) aktiviert wird.

## Beschreibung

Die vorliegende Erfindung betrifft eine Vorrichtung und ein Verfahren zum Bereitstellen von Diensten in einem Kommunikationsnetzwerk, die einfach zu realisieren, zu bedienen ist und kostengünstig im Betrieb sind.

Solche Vorrichtungen finden hauptsächlich dort Anwendung, wo eine geschlossene Benutzergruppe in einer Firma, Gebäude oder Betriebsstätte über eine begrenzte Anzahl von Kommunikationsleitungen mit einem offenen Kommunikationsnetz kommunizieren muss. Diese Anwendung wird insbesondere bei so genannten Insellösungen eingesetzt, wo die Kommunikation einer Kontrolle unterliegen soll oder muss.

Es ist eine Wertkartenlösung bekannt, bei der jeder Benutzer der geschlossenen Benutzergruppe eine eigene Wertkarte besitzt, auf der dann ein bestimmtes Guthaben gespeichert ist. Ein signifikantes Problem bei dieser Lösung ist, dass der Gebrauch einer dieser Wertkarten nicht unbedingt einem bestimmten Benutzer zugeordnet werden kann. Damit kann bei einem Kommunikationsdienst nicht automatisch erkannt werden, welcher Benutzer diesen Kommunikationsdienst ausführt. Eine eindeutige Kontrolle entfällt zwangsläufig.

Ein anderes Problem dieser Lösung ist, dass sich die Intelligenz zur Überprüfung der Wertkarte im Kartenlesegerät befindet und damit durch Dritte manipulierbar ist. Ein weiteres Problem bei dieser Wertkartenlösung ist, dass die Wertkarte und/oder das Guthaben durch den Karteninhaber oder Dritte manipuliert werden können.

Es ist daher eine Aufgabe der Erfindung eine Vorrichtung und ein Verfahren zu schaffen, um Dienste in einem Kommunikationsnetzwerk bereitzustellen, wobei die Vorrichtung und das Verfahren einfach aufgebaut sind, eine Identifizierung des Benutzers ermöglichen und gegen Manipulationen geschützt sind.

Diese Aufgabe wird gemäß den Merkmalen der unabhängigen Patentansprüche gelöst. Abhängige Ansprüche sind auf vorteilhafte Weiterentwicklungen bzw. bevorzugte Ausführungsformen der Erfindung gerichtet.

Erfindungsgemäß kann diese Aufgabe durch eine Vorrichtung zum Bereitstellen von Diensten in einem Kommunikationsnetzwerk, mit einem Endgerät, das eine Eingabeeinrichtung und eine Anzeigeeinrichtung aufweist, wobei mittels der Eingabeeinrichtung Zugangsdaten und/oder Verbindungsdaten eingegeben werden können, einer Steuervorrichtung, die mit dem Endgerät verbunden ist, und/oder einer Datenbank gelöst werden.

In der Vorrichtung kann dabei mindestens einer der folgenden Schritte ausführt werden:
Überprüfen der an der Eingabeeinrichtung eingegebenen Zugangsdaten,
Aufbauen einer Verbindung zwischen dem Endgerät und der Steuervorrichtung,
Einlesen von Einstellungsdaten aus der Datenbank in die Steuervorrichtung in Abhängigkeit der von dem Endgerät an die Steuervorrichtung übermittelten Zugangsdaten,
Aktivieren mindestens eines ersten spezifischen Dienstes in der Steuervorrichtung in Abhängigkeit der eingelesenen Einstellungsdaten, der die Kommunikation zwischen dem Endgerät und der Steuereinheit steuert,
Aktivieren eines zweiten spezifischen Dienstes in der Steuervorrichtung in Abhängigkeit des aktivierten Dienstes und der von dem Endgerät an die Steuervorrichtung übermittelten Verbindungsdaten, der die Kommunikation zwischen dem Endgerät und mindestens eines weiteren Endgerätes steuert, und/oder
Aktivieren eines dritten spezifischen Dienstes in der Steuervorrichtung zum Aufzeichnen mindestens der eingegebenen Zugangsdaten und Verbindungsdaten in der Datenbank.

Die Zugangsdaten und/oder die Verbindungsdaten können auf der Anzeigeeinrichtung ausgegeben werden. Die Datenbank kann Zugangsdaten, Verbindungsdaten und/oder Einstellungsdaten enthalten.
Bei dem Kommunikationsnetzwerk kann es sich um ein Telefonnetzwerk, ein Mobilfunknetzwerk, ein Computernetzwerk, ein leitungsvermitteltes Netzwerk und/oder ein paketvermitteltes Netzwerk handeln.

Bei dem Endgerät kann es sich um ein analoges Telefon, ein digitales Telefon, ein IP-Telefon, ein sonstiges IP-Endgerät, ein mobiles Endgerät und/oder ein Mobiltelefon handeln.

Bei der Steuervorrichtung kann es sich um mindestens eine Telefonanlage, einen Netzwerkrechner, einen Splitter und/oder ein Computer Telephone Integration (CTI) System handeln. Die Steuervorrichtung kann dabei auch aus einer beliebigen Kombination mehrerer der genannten oder weiteren Komponenten bestehen.

Der Benutzer meldet sich mittels Zugangsdaten am Endgerät an. Die Zugangsdaten können aus einer dem Benutzer zugewiesenen Kontonummer und/oder einer Personal Identification Number (PIN) bestehen. Die Zugangsdaten können ferner aus einem Fingerabdruck, einem Sprachmuster und/oder einem Netzhautmuster des Benutzers bestehen. Die Zugangsdaten können durch ein entsprechendes Gerät eingegeben und/oder abgefragt werden.

Die Kontonummer kann dabei vier- bis zehnstellig sein, vorzugsweise ist die Kontonummer fünf- bis neunstellig, weiter vorzugsweise ist die Kontonummer siebenstellig. Bei der Kontonummer kann eine Stelle eine Prüfziffer darstellen. Durch die Prüfziffer kann die Gültigkeit/Zulässigkeit der Kontonummer an sich überprüft werden.

Die PIN kann drei- bis zehnstellig sein, vorzugsweise ist die PIN vierbis achtstellig, weiter vorzugsweise ist die PIN fünfstellig. Die PIN kann von dem Benutzer beliebig oft geändert werden. Die PIN kann auch periodisch geändert werden.

Im Anschluss an ihre Erfassung werden die Zugangsdaten auf ihre Gültigkeit hin überprüft. Diese Überprüfung kann im Endgerät und/oder in der Steuervorrichtung erfolgen. Die Kontonummer und/oder die Prüfziffer können im Endgerät einzeln und/oder zusammen überprüft werden. Der Aufbau einer Verbindung zwischen dem Endgerät und der Steuervorrichtung kann von dem Ergebnis der Überprüfung abhängen. Das positive Ergebnis der Überprüfung identifiziert den Benutzer.

Nach dem Verbindungsaufbau werden die für diesen Benutzer unter den eingegebenen Zugangsdaten in der Datenbank gespeicherten Einstellungsdaten aus der Datenbank in die Steuervorrichtung eingelesen. Diese Einstellungsdaten können aus einem Benutzerprofil, Anwenderdaten und/oder Kontodaten bestehen. Die Einstellungsdaten können auch ein Gesprächsguthaben, eine Spracheinstellung und/oder mindestens eine Rufnummemliste enthalten.

In Abhängigkeit der eingelesenen anwenderspezifischen Daten kann nun mindestens ein Dienst in der Verarbeitungseinrichtung aktiviert werden. Nachdem mindestens ein Dienst aktiviert wurde, kann der Anwender weitere Eingaben am Endgerät vornehmen. Diese Eingaben können wiederum von dem Endgerät und /oder von der Steuervorrichtung auf ihre Zulässigkeit / Gültigkeit hin überprüft werden. In Abhängigkeit des / der bereits aktivierten Dienste und/oder der weiteren Eingaben kann mindestens ein weiterer Dienst in der Verarbeitungseinrichtung aktiviert werden. In Abhängigkeit des bereits aktivierten Dienstes können weitere mittels der Eingabeeinrichtung eingegebene Daten auch nicht akzeptiert werden.

Die Steuervorrichtung kann mindestens eine Verarbeitungseinrichtung enthalten, die mindestens eine Kommunikationsverbindung zwischen mindestens zwei Endgeräten aufbauen kann. Zu einer bestehenden Kommunikationsverbindung kann durch die Steuervorrichtung in Abhängigkeit eines aktivierten Dienstes eine Verbindung zwischen dem ersten Endgerät und mindestens einem weiteren Endgerät parallel zu der bereits bestehenden Verbindung hergestellt werden.

Die Steuervorrichtung kann eine Abrechungseinrichtung enthalten, die das Gesprächsguthaben entsprechend des/der aktivierten Dienste neu berechnet. Das aktuelle Gesprächsguthaben kann auf der Anzeigeeinrichtung vor dem Verbindungsaufbau, während der Verbindung und/oder nach dem Verbindungsabbau angezeigt werden.

Die Rufnummernliste kann eine Positivliste und/oder eine Negativliste sein. Von einer Positivliste spricht man, wenn alle Rufnummern außer den auf der Liste eingetragenen Nummern gesperrt sind. Bei einer Negativliste ist es genau umgekehrt, alle Rufnummern außer den auf der Liste eingetragenen Nummern sind erlaubt.

Die Steuervorrichtung kann eine Auswerteeinrichtung enthalten, die verschiedene Parameter eines Anrufs als Kontodaten aufzeichnet und in der Datenbank speichert. Diese aufgezeichneten Kontodaten können mit weiteren Kontodaten verglichen werden und in Abhängigkeit des Vergleichs kann ein weiterer spezifischer Dienst aktiviert werden. Bei den Parametern, die die Auswerteeinrichtung aufzeichnen kann, kann es sich um die Dauer der Verbindung, gewählte Nummer der Verbindung (zur Identifizierung des Zielteilnehmers) und/oder Eingaben während der Verbindung handeln.

Die Steuervorrichtung kann Leistungsmerkmale in einem weiteren und/oder externen Kommunikationsnetz erkennen. In Abhängigkeit des erkannten Leistungsmerkmals kann ein Dienst in der Steuervorrichtung aktiviert und/oder deaktiviert werden. Diese Leistungsmerkmale können eine automatische und/oder manuelle Rufweiterschaltung sein.

Die Steuervorrichtung kann eine Diagnoseeinrichtung enthalten, die mindestens einen Sensor abfragen kann. In Abhängigkeit eines Sensorsignals kann ein Dienst aktiviert werden.

Ein Dienst kann eine Sprachübertragung, eine Datenübertragung, eine Faxübertragung, eine Rufnummernübermittlung, eine Authentifizierungsabfrage, eine Kostenaufzeichnung, eine Kostenabfrage, eine Bildkommunikation, eine Rufweiterschaltung, eine Unterbrechung der Verbindung und/ oder der Stromversorgung, ein Verbindungsabbau und/oder ein Verbindungsaufbau sein. Ein Dienst kann mehrfach aktiviert werden. Mehrere Dienste können parallel aktiviert sein. Ein Dienst kann mindestens einen weiteren Dienst aktivieren.

Erfindungsgemäß kann diese Aufgabe auch durch ein Verfahren zum Bereitstellen von Diensten in einem Kommunikationsnetzwerk, mit einem Endgerät, mit einer Eingabeeinrichtung und/oder einer Anzeigeeinrichtung, und/oder einer Steuervorrichtung, die mit dem Endgerät verbundenen ist und eine Datenbank aufweist, welche zumindest Einstellungsdaten enthält, gelöst werden, wobei mittels der Eingabeeinrichtung Zugangsdaten und/oder Verbindungsdaten eingegeben und zumindest die Verbindungsdaten auf der Anzeigeeinrichtung angezeigt werden.

Das Verfahren kann dabei die folgenden Schritte ausführen:
Überprüfen der an der Eingabeeinrichtung eingegebenen Zugangsdaten,
Aufbau einer Verbindung zwischen dem Endgerät und der Steuervorrichtung,
Einlesen von Einstellungsdaten aus der Datenbank in die Steuervorrichtung in Abhängigkeit der von dem Endgerät an die Steuervorrichtung übermittelten Zugangsdaten,
Aktivieren eines ersten spezifischen Dienstes in der Steuervorrichtung in Abhängigkeit der eingelesenen Einstellungsdaten, der die Kommunikation zwischen dem Endgerät und der Steuervorrichtung steuert,
Aktivieren eines zweiten spezifischen Dienstes in der Steuervorrichtung in Abhängigkeit des aktivierten Dienstes und der von dem Endgerät an die Steuervorrichtung übermittelten Verbindungsdaten, der die Kommunikation zwischen dem Endgerät und mindestens eines weiteren Endgerätes steuert, und/oder
Aktivieren eines dritten spezifischen Dienstes in der Steuervorrichtung zum Aufzeichnen mindestens der eingegebenen Zugangsdaten und Verbindungsdaten in der Datenbank.

Weitere Besonderheiten und Vorzüge der Erfindung lassen sich anhand der schematischen Zeichnungen und der folgenden Beschreibung entnehmen; es zeigen:
Fig. 1 ein Ausführungsbeispiel für eine erfindungsgemäße Vorrichtung,
Fig. 2 ein Ausführungsbeispiel für eine weitere erfindungsgemäße Vorrichtung,
Fig. 3 eine Mithörvorrichtung zur Verwendung mit einer erfindungsgemäßen Vorrichtung und,
Fig. 4 ein Diagnosesystem zur Verwendung mit einer erfindungsgemäßen Vorrichtung.

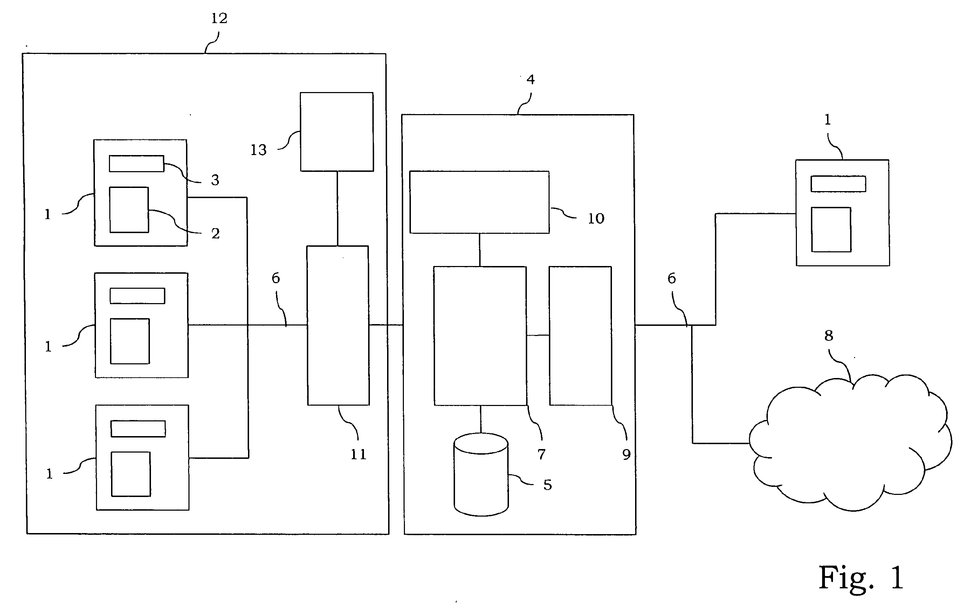

Fig. 1 zeigt ein erfindungsgemäßes Kommunikationssystem, das auf einer Voice-Over-IP-Basis arbeitet. Es sind Telefone 1, mit einer Tastatur 2 und einem Display 3 vorgesehen. An einem Standort 12 sind mehrere Telefone 1 vorhanden. Die Telefone 1 sind mit einem Rechenzentrum 4 über Verbindungen 6, insbesondere Datenkommunikationsverbindungen wie LAN (Local Area Network), WAN (Wide Area Neatwork), z.B. mittels des Intemet-Protokols, verbunden.

Alle Telefonate werden durch das Rechenzentrum 4 (Zentralrechner) vermittelt. Dazu werden die Telefonate von einem Standort 12 in einem Router (Gateway) 11 gebündelt und anschließend von dem Router 11 an das Rechenzentrum 4 weitergeleitet. Im Rechenzentrum werden die Telefonate abgewickelt und abgerechnet.

Wenn ein Telefonat geführt werden soll, muss ein Benutzer am Telefon 1 erst eine Kontonummer gefolgt von einer PIN über die Tastatur 2 eingeben. Der Grund für diese Vorabauthentifizierung liegt in einer Kosteneinsparung. Die Kontonummer enthält an der letzten Stelle eine Prüfziffer die durch das Telefon 1 ausgewertet wird. Damit ist gewährleistet, dass nur gültige Kontonummern an das Rechenzentrum 4 übermittelt werden und dadurch unnötige Verbindungskosten reduziert werden.

Wurde die Kontonummer als gültig erkannt, wird über den Router 11 eine Verbindung zum Rechenzentrum 4 aufgebaut. Dabei wandelt der Router 11 als Voice-Over-IP-Gateway die Sprache in Datenpakete um und steuert die Kommunikation zwischen dem Standort 12 und dem Rechenzentrum 4.

Das Rechenzentrum 4 enthält eine Datenbank 5, ein Computer Telephone Integration (CTI) System 7, eine Abrechnungseinrichtung 9 und eine Auswerteeinrichtung 10.

In der Datenbank 5 werden verschiedene Arten von Daten gespeichert, z.B. Verbindungsdaten, Nutzerprofile, Rufnummernlisten und/oder Anwenderdaten.

Die Abrechnungseinrichtung 9 rechnet die abgewickelten Telefonate und sonstige Dienste ab. Dabei wird der errechnete Betrag den jeweiligen Benutzerkonten belastet.

Die Auswerteeinrichtung 9 wertet die Gespräche die über ein Konto abgerechnet werden statistisch aus und vergleicht dieses Ergebnis mit den Auswertungen weiterer Konten.

Während der Einwahl in das Rechenzentrum 4 werden durch das Telefon 1 die Telefon ID, die Kontonummer sowie die PIN übermittelt. Das CTI System 7 im Rechenzentrum 4 prüft nun die Annmeldedaten auf Ihre Gültigkeit. Durch die übermittelte Telefon ID kann das Telefon 1 und die Position innerhalb des Standorts 12 ermittelt und die entsprechenden Einstellungen aus der Datenbank 5 geladen werden.

Wurde die Anmeldung (Kontonummer und PIN) als gültig erkannt, wird dem Benutzer das verfügbare Guthaben mitgeteilt. Er hat nun die Möglichkeit ein Telefonat zu führen oder über das Servicemenü Einstellungen vorzunehmen oder verschiedene Informationen wie z.B. Einzelverbindungsnachweise abzurufen.

Konnte das Rechenzentrum 4 die gewählte Nummer erreichen, wird die Verbindung zwischen den Teilnehmern über öffentliche und private (Telefon-) Netze hergestellt.

Sämtliche Konto-, Verbindungs- sowie Abrechnungsdaten werden in einer Datenbank 5 zentral gehalten. Auf diese Datenbank 5 hat das CTI System 7 direkten Zugriff. Diese Daten können anschließend grafisch und statistisch ausgewertet werden.

Damit die Telefoneinstellungen von Positionen innerhalb des Standorts 12 aus verändert werden können, gibt es in dem Standort 12 Terminals 13, die sich in das Rechenzentrum 4 einwählen können. Hierfür gibt es mehrere Möglichkeiten: indirekt via VPN Tunnel und/oder Internet oder direkt über Analog und/oder ISDN über das öffentliche Telefonnetz mittels einer Quality of Service Regelung. Im letzteren Fall erfolgt die Datenübertragung über die gleichen Leitungen 6 wie die Telefonate. Damit die Telefonate nicht durch die Datenübertragung beeinträchtig werden, kann den Einwahlverbindungen die benötigte Bandbreite dynamisch zugewiesen werden.

Mittels der Terminals 13 in dem Standort 12 können sämtliche Einstellungen des Telefonsystems dieses Standorts 12 verändert werden. Es können Benutzer eingerichtet und gelöscht, Kontonummem und PINs generiert, sowie alle Aufgaben einer Kontoverwaltung durchgeführt werden.

Weiterhin gibt es an den Terminals 13 eine Monitoringfunktion durch die Gespräche mitgehört und/oder mitprotokolliert werden können. Da alle Gespräche über das Rechenzentrum 4 vermittelt und überwacht werden, kann an einem Terminal 13, das an dem Datenbankcluster im Rechenzentrum 4 angemeldet ist, eine Gesprächsübersicht der aktuell laufenden Gespräche abgerufen werden. Ein Gespräch kann direkt mitgehört werden. Dabei wird vom Rechenzentrum 4 zu dem Terminal 13 im Standort 12 eine Verbindung aufgebaut und über die Verbindung kann dann ein Gespräch in einer Konferenzschaltung zu dem bestehenden Gespräch geführt werden.

Eine Anmeldung an die Datenbank 5 kann auch via Internet erfolgen. Dadurch kann eine Gesprächskontrolle weltweit durchgeführt werden. Ein Gespräch kann auch per Telefonanruf mitgehört werden. In diesem Fall wird während des mitzuhörenden Gesprächs eine Telefonnummer des Rechenzentrums 4 angerufen. Über die Verbindung zu dieser Nummer wird dann ein Gespräch in einer Konferenzschaltung zu dem bestehenden Gespräch geführt. Gespräche können auch mitgeschnitten werden. Dabei erfolgt die Gesprächsspeicherung ebenfalls im Rechenzentrum 4. Möchte man ein aufgezeichnetes Gespräch abhören, so kann dieses entweder per Anruf an das Rechenzentrum 4 oder per Datenübertragung an ein beliebiges Endgerät erfolgen.

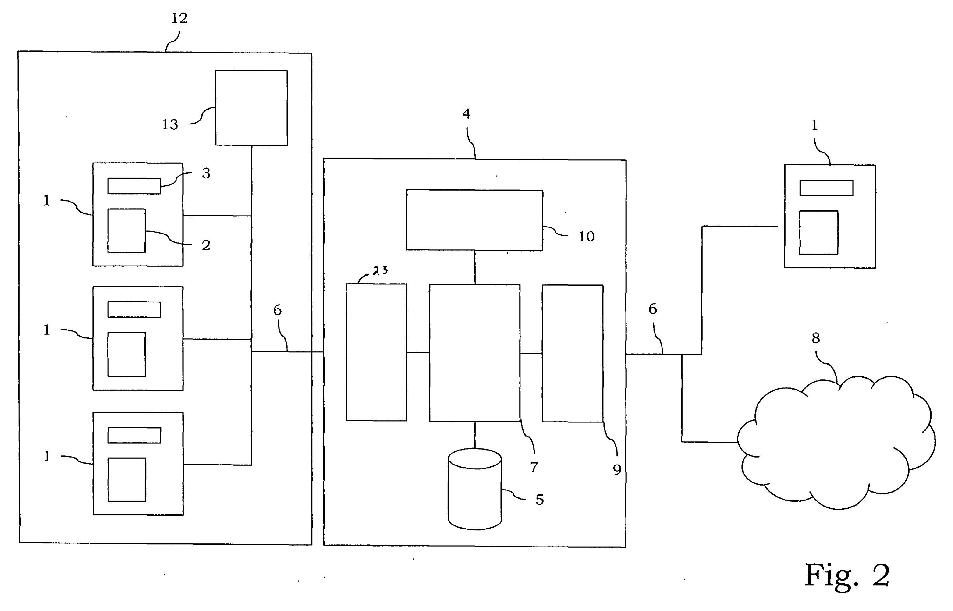

Fig. 2 zeigt eine erfindungsgemäße Vorrichtung, bei der die Telefone 1 und das Terminal 13 direkt mit dem Rechenzentrum 4 verbunden sind. Die Aufgaben des Routers 11 übernimmt eine Verbindungseinrichtung 23 innerhalb des Rechenzentrums 4.

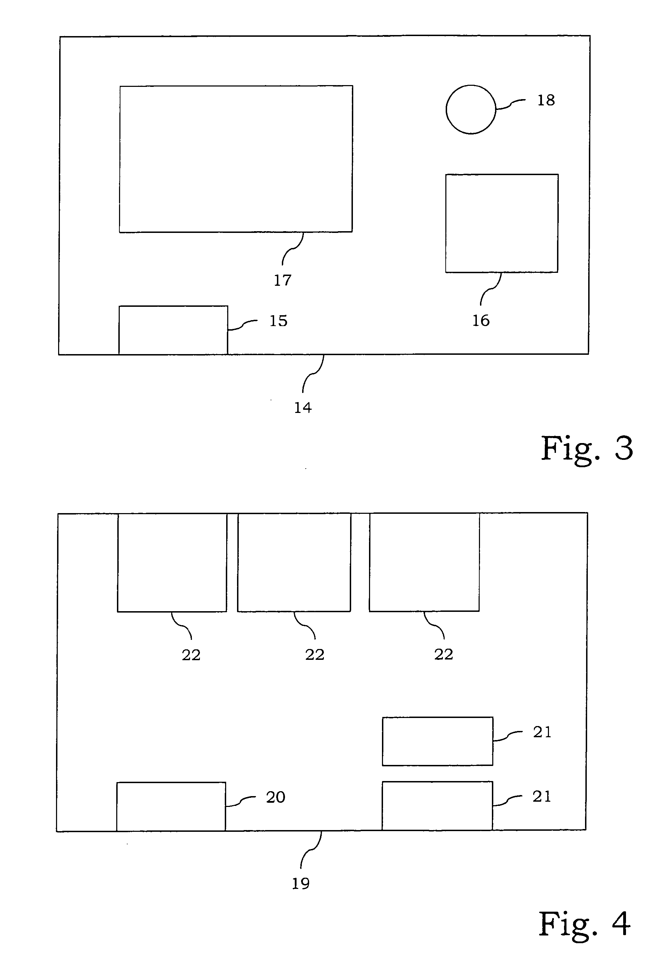

Fig. 3 zeigt eine Mithörvorrichtung 14 zur Verwendung mit der erfindungsgemäßen Vorrichtung, um ein Mithören der Telefonate zu ermöglichen. Die Mithörvorrichtung weist einen Lautsprecher 17 und mindestens eine Signallampe 18 auf. Die Mithörvorrichtung 14 kommt zum Einsatz, wenn ein Telefon 1 lokal am Standort 12 überwacht werden soll.

Die Grundfunktionen der Mithörvorrichtung 14 sind:
- Mithören des Gesprächs
- Aufzeichnen des Gesprächs
- Verhindern des Mithörens bei bestimmten Gesprächen

Die Mithöreinrichtung 14 wird parallel zum Telefon 1 angeschlossen. Die Signalisierung erfolgt Inband durch DTMF Signale und/ oder über einen Netzwerkanschluss 15. Bei der Verwendung eines Netzwerkanschlusses ist die Signalisierung nicht mehr für den Benutzer hörbar.

Die Mithörvorrichtung 14 weist einen Splitter 16 auf. Durch modifizieren des Splitters 16 kann ein vollständig digitales Mithören z.B. für Voice over IP oder eine anderes zweckmäßiges Verfahren realisiert werden. Eine Neuverdrahtung sowie ein Austausch der Mithörvorrichtung 14 entfällt.

Die Signallampe 18 zeigt an ob das gerade geführte Gespräch mitgehört werden kann.

Fig. 4 zeigt ein Diagnosesystem 19 zur Verwendung mit der erfindungsgemäßen Vorrichtung zur Fernüberwachung und -steuerung, um bei technischen Problemen der Vorrichtungen in den Standorten 12 schnell reagieren zu können. Dadurch können die Ausfall- bzw. Stillstandszeiten des Systems stark vermindert werden.

Das Diagnosesystem 19 hat einen Netzwerkanschluss 20, Sensoreingänge 21 und Stromversorgungsanschlüsse 22 für verschieden elektrische Verbraucher. Das Diagnosesystem kann die folgenden Aktionen steuern:
- Schalten von Verbrauchern (z.B. Router 11)
- Überwachung der Temperatur
- Überwachung der unterbrechungsfreien Stromversorgung (USV)
- Überwachung von Schaltkontakten für einfache Steuerungsaufgaben z.B. Not Aus.

Das Diagnosesystem 19 kann so konfiguriert werden, dass bei verschiedenen Ereignissen, z.B. bei einem Verbindungsabbruch zur Zentrale, automatisch der Router 11 und/oder das Terminal 13 neu gestartet werden. Dies geschieht z.B. über eine Unterbrechung der Stromversorgung der Geräte. Das Diagnosesystem 19 kann auch über einen Temperatursensor die Schaltschranktemperatur aufnehmen und ab einer gewissen Temperatur die Schrankklimatisierung ansteuern.

Jedem Signal an einem der Sensoreingänge 21 kann eine Aktion an einem Stromversorgungsanschluss 22 oder am Netzwerkanschluss 20 zugeordnet werden. Dabei sind auch Prioritätsketten möglich. Alle Sensorsignale und Zustände können per TCP/IP oder einem anderen zweckmäßigen Protokoll abgefragt und/oder angesteuert werden. Die Konfiguration erfolgt dabei über ein HTTP Interface oder durch ein anderes zweckmäßiges Protokoll.

Obwohl die Erfindung mittels Ausführungsbeispiele basierend auf einer Voice-Over-IP-Kommunikation beschrieben wurde, ist sie nicht darauf begrenzt und kann selbstverständlich auch mittels herkömmlicher leitungsvermittelter Technologie, wie digitale Nebenstellenanlagen, realisiert werden.

Die einzelnen Teile der Erfindung sind selbstverständlich nicht beschränkt auf die beschriebenen Kombinationen und können auch in anderen Kombinationen bzw. unabhängig voneinander eingesetzt werden. Die einzelnen Erfindungsgedanken können erfindungsgemäß auch selbständig oder in Verbindung mit anderen Gegenständen zur Anwendung kommen.

## Patentansprüche

1. Vorrichtung zum Bereitstellen von Diensten in einem Kommunikationsnetzwerk, mit:
einem Endgerät (1), mit einer Eingabeeinrichtung (2) und einer Anzeigeeinrichtung (3), wobei mittels der Eingabeeinrichtung (2) Zugangsdaten und Verbindungsdaten eingegeben und zumindest die Verbindungsdaten auf der Anzeigeeinrichtung (3) angezeigt werden, und
einer Steuervorrichtung (4), die mit dem Endgerät (1) verbunden ist und eine Datenbank (5) aufweist, welche zumindest Einstellungsdaten enthält,
**dadurch gekennzeichnet, dass**
- eingegebene Zugangsdaten an der Eingabeeinrichtung (2) überprüft werden,
- zwischen dem Endgerät (1) und der Steuervorrichtung (4) eine Verbindung aufgebaut wird,
- aus der Datenbank (5) in die Steuervorrichtung (4) Einstellungsdaten in Abhängigkeit der von dem Endgerät (1) an die Steuervorrichtung (4) übermittelten Zugangsdaten eingelesen werden,
- ein erster spezifischer Dienst in der Steuervorrichtung (4) in Abhängigkeit der eingelesenen Einstellungsdaten aktiviert wird, der die Kommunikation zwischen dem Endgerät (1) und der Steuereinheit steuert,
- ein zweiter spezifischer Dienst in der Steuervorrichtung (4) in Abhängigkeit des ersten aktivierten Dienstes und der von dem Endgerät (1) an die Steuervorrichtung (4) übermittelten Verbindungsdaten aktiviert wird, der die Kommunikation zwischen dem Endgerät (1) und mindestens eines weiteren Endgerätes (1) steuert, und
- ein dritter spezifischer Dienst in der Steuervorrichtung (4) zum Aufzeichnen mindestens der eingegebenen Zugangsdaten und Verbindungsdaten in der Datenbank (5) aktiviert wird.

2. Vorrichtung nach Anspruch 1, **dadurch gekennzeichnet, dass** die Einstellungsdaten aus Anwenderdaten und Kontodaten bestehen und/oder die Zugangsdaten aus einer Kontonummer und einer Kennzahl bestehen.

3. Vorrichtung nach Anspruch 1 oder 2, **dadurch gekennzeichnet, dass** die Kontonummer eine Prüfziffer enthält.

4. Vorrichtung nach zumindest einem der vorangegangenen Ansprüche, **dadurch gekennzeichnet, dass** die Zugangsdaten im Endgerät (1) überprüft werden.

5. Vorrichtung nach zumindest einem der vorangegangenen Ansprüche, **dadurch gekennzeichnet, dass** die Zugangsdaten in der Steuervorrichtung (4) überprüft werden.

6. Vorrichtung nach zumindest einem der vorangegangenen Ansprüche, **dadurch gekennzeichnet, dass** die Steuervorrichtung (4) in Abhängigkeit eines aktivierten Dienstes eine Verbindung zwischen dem Endgerät (1) und einem weiteren Endgerät (1) herstellt.

7. Vorrichtung nach zumindest einem der vorangegangenen Ansprüche mit einer Abrechnungseinrichtung (9) welches das Gesprächsguthaben entsprechend der aktivierten Dienste neu berechnet.

8. Vorrichtung nach zumindest einem der vorangegangenen Ansprüche, **dadurch gekennzeichnet, dass** die Steuervorrichtung (4), verschiedene Parameter eines Anrufs als Kontodaten aufzeichnet und in der Datenbank (5) speichert.

9. Vorrichtung nach zumindest einem der vorangegangenen Ansprüche, mit einer Auswerteeinrichtung (10), die aufgezeichnete Kontodaten mit weiteren Kontodaten vergleicht und in Abhängigkeit des Vergleichs einen weiteren spezifischen Dienst aktiviert.

10. Vorrichtung nach zumindest einem der vorangegangenen Ansprüche, **dadurch gekennzeichnet, dass** die Steuervorrichtung (4) Leistungsmerkmale in einem weiteren Kommunikationsnetz erkennt und in Abhängigkeit des erkannten Leistungsmerkmals einen Dienst in der Steuervorrichtung (4) aktiviert.

11. Vorrichtung nach zumindest einem der vorangegangenen Ansprüche, mit einer Einrichtung, die in Abhängigkeit eines Dienstes aktiviert wird und die es ermöglicht eine zusätzliche Verbindung zwischen den Endgeräten (1) und einem weiteren Endgerät (1) herzustellen.

12. Vorrichtung nach zumindest einem der vorangegangenen Ansprüche, mit einer Diagnoseeinrichtung (19), wobei die Diagnoseeinrichtung (19) in Abhängigkeit eines Sensorsignals einen Dienst aktiviert.

13. Verfahren zum Bereitstellen von Diensten in einem Kommunikationsnetzwerk, mit:
einem Endgerät (1), mit einer Eingabeeinrichtung (2) und einer Anzeigeeinrichtung (3), wobei mittels der Eingabeeinrichtung (2) Zugangsdaten und Verbindungsdaten eingegeben und zumindest die Verbindungsdaten auf der Anzeigeeinrichtung (3) angezeigt werden, und
einer Steuervorrichtung (4), die mit dem Endgerät (1) verbundenen ist und eine Datenbank (5) aufweist, welche zumindest Einstellungsdaten enthält,
wobei das Verfahren die folgenden Schritte ausführt:
- Überprüfen der an der Eingabeeinrichtung (2) eingegebenen Zugangsdaten,
- Aufbau einer Verbindung zwischen dem Endgerät (1) und der Steuervorrichtung (4),
- Einlesen von Einstellungsdaten aus der Datenbank (5) in die Steuervorrichtung (4) in Abhängigkeit der von dem Endgerät (1) an die Steuervorrichtung (4) übermittelten Zugangsdaten,
- Aktivieren eines ersten spezifischen Dienstes in der Steuervorrichtung (4) in Abhängigkeit der eingelesenen Einstellungsdaten, der die Kommunikation zwischen dem Endgerät (1) und der Steuervorrichtung (4) steuert,
- Aktivieren eines zweiten spezifischen Dienstes in der Steuervorrichtung (4) in Abhängigkeit des aktivierten Dienstes und der von dem Endgerät (1) an die Steuervorrichtung (4) übermittelten Verbindungsdaten, der die Kommunikation zwischen dem Endgerät (1) und mindestens eines weiteren Endgerätes (1) steuert, und
- Aktivieren eines dritten spezifischen Dienstes in der Steuervorrichtung (4) zum Aufzeichnen mindestens der eingegebenen Zugangsdaten und Verbindungsdaten in der Datenbank (5).

14. Verfahren nach Anspruch 13, **dadurch gekennzeichnet, dass** die Steuervorrichtung (4) in Abhängigkeit eines aktivierten Dienstes eine Verbindung zwischen dem Endgerät (1) und einem weiteren Endgerät (1) herstellt.
